# EUROPEAN PATENT SPECIFICATION

(11) **EP 1 845 339 B1**
(45) Date of publication and mention of the grant of the patent: **28.12.2011**
(21) Application number: 06730504.5
(22) Date of filing: 29.03.2006
(51) Int. Cl.: G01C 21/00, G08G 1/09, G08G 1/0969

(54) **NAVIGATION SYSTEM FOR VEHICLE**
NAVIGATIONSSYSTEM FÜR KRAFTFAHRZEUG
SYSTEME DE NAVIGATION POUR VEHICULE

(30) Priority: 30.03.2005 JP 2005098376
(43) Date of publication of application: 17.10.2007
(73) Proprietor: AISIN AW CO., LTD., Anjo-shi, Aichi 444-1192 (JP)
(72) Inventor: IGAWA, Junichiro, AISIN AW CO., LTD, Okazaki-shi, Aichi 444-8564 (JP); TOMITA, Hiroshi, AISIN AW CO., LTD, Okazaki-shi, Aichi 4448564 (JP)
(74) Representative: Kramer - Barske - Schmidtchen
(86) International application number: PCT/JP2006/306556
(87) International publication number: WO 2006/106777

(56) References cited:
- DE-A1- 10 233 378
- JP-A- 11 353 587
- JP-A- 11 353 587
- JP-A- 2000 222 682
- JP-A- 2001 028 099
- JP-A- 2001 136 090
- JP-A- 2002 107 156
- JP-A- 2002 107 156
- JP-A- 2002 236 029
- JP-A- 2002 365 066
- US-A1- 2003 179 110
- JUN MIURA ET AL: "An active vision system for real-time traffic sign recognition" INTELLIGENT TRANSPORTATION SYSTEMS, 2000. PROCEEDINGS. 2000 IEEE OCTOBER 1-3, 2000, PISCATAWAY, NJ, USA,IEEE, 1 October 2000 (2000-10-01), pages 52-57, XP010520515 ISBN: 978-0-7803-5971-0

## Description

### Technical Field

The present invention relates to a navigation system for a vehicle, in particular, a navigation system for announcing traffic congestion information along a traveling route of the vehicle to a driver of the vehicle in real time.

### Background Art

According to the Japanese Unexamined Patent Application Publication No. H11(1999)-353587, a navigation apparatus, comprising: a storage device for storing information of a radio station broadcasting traffic information such as the position of the radio station, coverage, and reception frequency; a receiver for receiving the traffic information; a control section for operating the receiver provided that both the receiver for receiving the traffic information and the position of the vehicle detected by a position detecting device are located within the coverage of the radio station; and an information conversion device for analyzing the traffic information received by the receiver as audio data and converting the traffic information to textual information; wherein the textual information converted by the information conversion device is displayed on a monitor screen 2, is suggested. According to the navigation apparatus, road information received by a tuner section of the receiver is output from a speaker as audio guidance while the road information is analyzed by an audio recognition section of the information conversion device and displayed on the monitor screen after being converted to textual information.

According to the navigation apparatus, even if there is no congested area on a traveling route while the vehicle is located within the coverage of the radio station whose data is stored in the storage device, traffic information about the traveling route is automatically announced with audio guidance. Therefore, when the driver of the vehicle is listening to music, unnecessary traffic information for the driver interrupts the music. What is worse is that unnecessary audio information might decrease the driver's alertness during his/her driving, so that the driver might feel stressed. Further, the receiver in the navigation apparatus cannot receive traffic information such as traffic control information, road construction information, and/or traffic accident information when the vehicle has already moved out from the coverage of the radio station whose data is stored in the storage device and when the vehicle is no longer located within the coverage of the radio station. Therefore, the driver cannot obtain traffic information regarding a congested area on the traveling route ahead of the vehicle.

DE 102 33 378 A1 discloses a navigation system for a vehicle comprising a communication section for receiving traffic information which is received from a radio station, an audio output determining device for determining whether an audio output condition is met, and an audio output processing device for outputting an audio guidance of traffic information which is received from the radio station by the communication section, provided that the audio output determining device determines that the audio output condition is met.

### Disclosure of Invention

In the light of the foregoing background, the present invention provides a navigation system for a vehicle according to claim 1.

The present invention further provides a navigation system for a vehicle for providing audio information regarding traffic congestion which is because of a traffic control, a traffic accident, and/or a road construction within a coverage of a radio station along a traveling route to a driver only when a predetermined audio output condition is met.

The present invention further provides a navigation apparatus for a vehicle for providing audio traffic information according to an existence of a congested area which is because of a traffic control, a traffic accident, and/or a road construction whenever a driver of the vehicle wants to know even if the vehicle is located out of a coverage of a radio station providing traffic information.

According to the navigation system for the vehicle with the structures described above, the traffic information received by the communication section is announced with audio guidance only when current traffic information which is received from the radio station by the communication section during the traveling of the vehicle is under the audio output condition which has been preset. Therefore, the driver may enjoy his/her music or news during his/her driving without being interrupted by unnecessary traffic information and the driver may surely obtain necessary information regarding a congested area.

Various exemplary implementations of the principles described herein provide a navigation system for a vehicle, comprising: a communication section for receiving traffic information which is provided from a radio station and current traffic,information which is provided from a road traffic information center; a coverage determining device for determining whether the vehicle is located within a coverage of the radio station depending on receptions of radio waves which are received from the radio station; an audio output determining device for determining whether current traffic information which is received from the road traffic information center by the communication section is under a predetermined audio output condition for specifying a congested area; and audio output processing device for outputting the traffic information which is received from the radio station by the communication section with audio guidance when the audio output determining device determines that the audio output condition is met while the coverage determining device determines that the vehicle is located within the coverage of the radio station.

Various exemplary implementations of the principles described herein provide a navigation system for a vehicle, comprising: a current position detecting device for detecting a current position of the vehicle; a data storage section for storing a coverage of a radio station; a communication section for receiving traffic information which is provided from the radio station and current traffic information which is provided from a road traffic information center; a coverage determining device for determining whether the vehicle is located within the coverage which is stored in the data storage section on the basis of a detection signal provided by the current position detecting device; an audio output determining device for determining whether the current traffic information which is received from the road traffic information center by the communication section is under a predetermined audio output condition for specifying a congested area; and an audio output processing device for outputting the traffic information which is received from the radio station by the communication section with audio guidance when the audio output determining device determines that the audio output condition is met while the coverage determining device determines that the vehicle is located within the coverage of the radio station.

To solve the problems described above, the present invention provides a navigation system for a vehicle, comprising: a communication section for receiving traffic information which is provided from a radio station and current traffic information which is provided from a road traffic information center; an audio output determining device for determining whether the current traffic information which is received from the road traffic information center by the communication section is under a predetermined audio output condition for specifying a congested area; an audio output device for outputting the traffic information which is received from the radio station by the communication section with audio guidance when the audio output determining device determines that the audio output condition is met; and a storage device for storing the traffic information which is received from the radio station by the communication section when the audio output determining device determines that the audio output condition is not met; wherein: the audio output device outputs traffic information which is stored in the storage device with audio guidance when the vehicle is out of the coverage of the radio station.

According to the present invention, it is preferable to provide a navigation system for a vehicle, comprising: a current position detecting device for detecting a current position of the vehicle; a data storage section for storing map data necessary for searching for a route and coverage data of a radio station along the searched route on the basis of map data; a communication section for receiving traffic information which is provided from the radio station and current traffic information which is provided from a road traffic information center; a coverage determining device for determining whether a current position of the vehicle is located within a coverage of the radio station whose data is stored in the data storage section on the basis of a detection signal provided by the current position detecting device; an audio output determining device for determining whether the current traffic information which is received from the road traffic information center by the communication section is under a predetermined audio output condition for specifying a congested area when the coverage determining device determines that the vehicle is located within the coverage; a display device for displaying a message on a screen to let the driver know that the traffic information which is received from the radio station by the communication section is ready for being outputted with audio guidance by the driver's instruction when the audio output determining device determines that the audio output condition is met; a storage device for storing the traffic information which is received from the radio station by the communication section when the audio output determining device determines that the received current traffic information is not under the audio output condition; a display control device for displaying a message on the display device to let the driver know that traffic information which is stored in the storage device is ready for being outputted with audio guidance by the driver's instruction when the coverage determining device determines that the vehicle is not located within the coverage; and an audio output device for outputting the traffic information which is received from the radio station with audio guidance when the driver operates an operating section displayed on the screen of the display device.

According to the embodiment of the present invention, traffic information which is received by the communication section may be announced with audio guidance by the driver's instruction only when the current traffic information which is received within the coverage of the radio station includes information regarding a predetermined congested area during the vehicle's traveling along the route. Therefore, the driver may enjoy music or news during his/her driving without being interrupted by unnecessary traffic information. Further, when the driver wants to know the existence of a congested area which is because of a traffic control, a traffic accident, or a road construction, the driver may surely obtain traffic information regarding the congested area necessary for the driver. When the vehicle is located out of the coverage of the radio station, traffic information, which has been received by the receiver when the vehicle was in the coverage, may be announced with audio guidance by the driver's instruction, so that the driver may know the existence of the congested area along the traveling route forward which the vehicle will travel.

### Brief Description of the Drawings

FIG. 1 is a block diagram of a navigation system according to an embodiment of the invention.
FIG. 2 is a flowchart of a program for audio output processing executed by a navigation processing section in FIG. 1.
FIG. 3 is a diagram of a road map displayed on a screen of a display section as shown in FIG. 1 and audio guidance.
FIG. 4 is a flowchart of a program for audio outputting processing executed by the navigation processing section in FIG. 1 according to another embodiment of the invention.
FIG. 5 is a diagram of an operating section which is displayed on the screen of the display section in FIG. 1.
FIG. 6 is a diagram of a road map displayed on the screen of the display and the audio guidance when a driver operates the operating section in FIG. 5.
FIG. 7 is a flowchart of a modified embodiment of the audio output processing program in FIG 2.
FIG. 8 is a flowchart of a modified embodiment of the audio output processing program in FIG. 2.

### Best Mode for Carrying Out the Invention

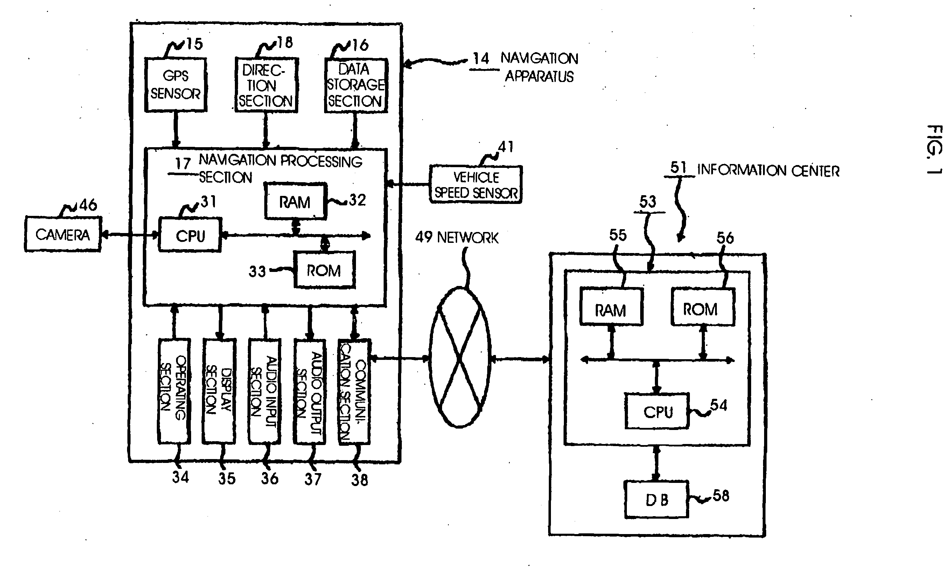

FIG 1 shows an outline of a navigation system for a vehicle according to an embodiment of the invention. The navigation system may include a navigation apparatus 14 used as an in-vehicle information terminal, a network 43, and an information center 51.

The navigation apparatus 14 may include a GPS sensor 15 for detecting a current position of the vehicle, a data storage section 16 for storing map data with various information, a navigation processing section 17 for carrying out navigation processing and various types of calculation processing, a direction sensor 18 for detecting a direction of the vehicle, an operating section 34 which is operated by the driver, a display section 35 having a display on which various images are displayed, an audio input section 36 for inputting audio data, an audio output section 37 for outputting audio guidance of various information to the driver, and a communication section 38 for functioning as a communication terminal. The navigation processing section 17 in the navigation apparatus is connected to the GPS sensor 15, the direction sensor 18, the data storage section 16, the operating section 34, and the audio input section 36 through an input side thereof and connected to the display section 35 and the audio output section 37 through an output side thereof. The communication section 38 is connected to the navigation processing section 17 through input and output terminals. The navigation processing section 17 is further connected to a vehicle speed sensor 41 for detecting the vehicle speed and a camera 46 for taking an image of an area surrounding the vehicle. The camera 46 includes a CCD and/or a C-MOS and takes an image of a congestion information signboard which is placed along a traveling route of the vehicle and sends the image data to the navigation processing section 17.

The GPS sensor 15 has a function of receiving an electronic wave from a satellite for calculating an absolute position of the vehicle and for detecting the current position while calculating the traveling speed and the travel direction of the vehicle. The direction sensor 18 is a geomagnetic sensor for calculating an absolute travel direction of the vehicle and detecting the travel direction of the vehicle on the basis of the change in direction calculated by the gyro sensor or the GPS sensor. The data storage section 16 includes a map database with a map data file in which map data is stored, radio station data including a position of a radio station which broadcasts traffic information, coverage of the radio station, and reception frequency, output data for outputting predetermined information from the audio output section 37, a statistical database with a statistical data file, and a travel history database with a travel history data file. The map data further includes various data such as intersection data, node data, road data regarding road links, search data for searching for a route, and facility data.

As statistical data, traffic information which was provided by a road traffic information center (VICS) in the past, traffic volume data obtained from road traffic census provided by the Ministry of Land, Infrastructure and Transport, and history information such as road timetable information are stored. For each of a plurality of data items, link number data for each road link on traveling routes along which the vehicle has traveled in the past, a direction flag indicating the travel direction, type of information, a congestion degree at a predetermined time, a link required time indicating required time to travel on a road link, and an average link required time for each day of the week are stored. In this case, the congestion degree stored in the data item indicates a congestion level in three stages, that is, "not congested", "congested", and "crowded".

Travel history data stored in the travel history database is calculated and stored on the basis of travel record data along the traveling route of the vehicle. As the data item, a link required time to travel on each road link and the corresponding congestion degree are stored.

The data storage section 16 in which various data described above is stored includes a flash memory, an RAM, a hard disk, a CD, a DVD, or an optical disk. According to the embodiment, various data described above is stored in the data storage section 16. However, the same data may be obtained from the information center 51.

The navigation processing section 17 includes a CPU 31 for executing various types of calculations, a RAM 32 functioning as a working memory used for calculation processing executed by the CPU, a ROM 33 for storing various types of programs for performing a route search and a route guidance to a destination together with a control program, and a flash memory for storing the various data and programs described above.

The operating section 34 is, for example, a keyboard or a mouse and is mounted in the navigation system next to the display section 35 to be operated by the driver. More specifically, the operating section 34 is operated by the driver when the driver corrects a current position at the start of traveling with the vehicle, when a starting point and a destination are set, when a passing point is set, or when the communication section 38 is operated. A touch panel is used as the operating section 34. The touch panel is set on the screen of the display section 35 and has image operating sections such as various types of keys, switches, or buttons. By touching or clicking such keys, switches, or buttons, input operation may be executed.

On the display in the display section 35, the current position of the vehicle, a map, a searched route, guidance information regarding the searched route, traffic information regarding the searched route, a distance to an intersection along the route, and/or a travel direction at the next intersection may be displayed. Further, operating guidance, an operating menu, and key guidance for the operating section 34 or the audio input section 35 may be displayed on the screen of the display. Programs of radio stations may be displayed as well.

The audio input section 36 is a microphone for allowing the driver to input necessary audio information. The audio output section 37 includes a speaker and a voice synthesizer (not shown). The voice synthesizer of the audio output section 37 produces voice synthesis information regarding the searched route, guidance information, and/or traffic information and the voice synthesis information is output from the speaker.

The communication section 38 includes a radio receiver for receiving audio traffic information which is provided from a radio station, a beacon receiver for receiving current traffic information which is originally provided from the road traffic information center through an electric wave beacon device or an optical beacon device which is mounted along the traveling route, or a radio receiver for receiving current road traffic information which is provided from a traffic information service (Radio Data System-Traffic Message Channel) through FM multiplex broadcasting. The communication section 38 further includes an information receiver such as a PC, a PDA, or a mobile phone for obtaining current road traffic information through the Internet. Note that, road traffic information includes congestion information, traffic control information, parking information, traffic accident information, and parking area congestion information.

Further, road traffic information includes information type indicating types of information, a mesh number for specifying a mesh indicating a predetermined region, link number data for specifying a road link which connects two points (for example, two intersections) with each other and for indicating outbound or inbound routes, and link information indicating information which is provided for corresponding link number data. For example, when congestion information is provided as traffic information, congestion starting point data indicating a distance from a starting point of a road link to a starting point of a congested area, a congestion degree, a congestion length indicating the distance covered by the congested area, and a link required time may be displayed as link information.

The information center 51 includes a server 53 and a database (DB) 58 as a communication section and as an information storage section connected to the server 53. The server 53 further includes a CPU 54, a RAM 55, and a ROM 56. In the database 58, similar data as various data stored in the data storage section 16 of the navigation apparatus is stored. The information center 51 provides real-time travel history data which is collected from a plurality of vehicles (the vehicle in which the navigation system is installed and other vehicles).

The basic operation of the navigation system which works as a route guidance system according to the embodiment will be described below. When the navigation apparatus 14 is activated by the operation of the operating section 34 performed by the driver, the CPU 31 executes initialization processing of the navigation program while reading the current position of the vehicle which is detected by the GPS sensor 15 and the travel direction of the vehicle which is detected by the direction sensor 18 and initializing various data. The CPU 31 executes matching processing to specify the current position of the vehicle. More specifically, the CPU 31 determines whether the current position is located on any road link on the basis of information of road link shape and an arrangement of the road links along a road within an area surrounding the read current position.

Next, the CPU 31 executes obtaining processing to obtain basic information and obtains map data which is read out from the data storage section 16 or obtains the map data from the information center 51 through the communication section 38. When map data is obtained from the information center 51, the CPU 31 downloads the received map data on the flash memory while obtaining the control program for the map data.

Therefore, the CPU 31 executes map data display processing to display a map screen on the display of the display section 35 and further displays the current position of the vehicle, the travel direction of the vehicle, and an area map depicting the area surrounding the vehicle on the map screen. The driver may visually check the position of the vehicle, the travel direction of the vehicle, and the area map.

When the driver operates the operating section 34 to input a destination, the CPU 31 executes destination setting processing to set the destination. In this case, a predetermined point which has been registered in advance may be set as the destination. When the driver operates the operating section 34 to input a search condition, the CPU 31 executes search condition setting processing to set the search condition. After the destination and the search condition are set, the CPU 31 executes route search processing and reads the current position of the vehicle, the destination, and the search condition while reading out search data from the data storage section 16. The CPU 31 searches for a route from the current position to the destination under the search condition on the basis of the read out search data and outputs route data indicating the searched route. In this case, one route which has the minimum total link cost of link costs set to each of all road links along the route is determined as the searched route among a plurality of routes. The CPU 31 executes route display processing and displays the searched route on the map screen displayed on the screen of the display section 35 on the basis of the read route data. The CPU 31 executes audio output processing to output audio guidance for the searched route from the audio output section 37 depending on the operation of the operating section 34.

According to the navigation system, when the CPU 31 sends the current position, the destination, and the search condition to the information center 51, the CPU 54 of the information center 51 executes route search processing as the CPU 31 does and reads the current position, the destination, and the search condition while reading out search data from the database 58. The CPU 54 searches for the route from the current position to the destination under the search condition on the basis of the read out data and outputs route data indicating the searched route. The route data is transferred to the communication section of the navigation apparatus 14 by the CPU 54. As described above, the CPU 31 of the navigation processing section 17 executes route display processing, reads route data and displays the searched route on the map screen displayed on the screen of the display section 35.

According to the navigation system, while the driver is traveling along the searched route which is displayed on the map screen on the display of the display section 35, when the vehicle enters a coverage of a radio station, a radio receiver of the communication section 38 receives traffic information. The traffic information received by the radio receiver is automatically output from the speaker of the audio output section 37. However, if the driver is listening to music or radio news at this moment, unnecessary audio traffic information interrupts the music or news and it might decrease the driver's alertness during his/her driving.

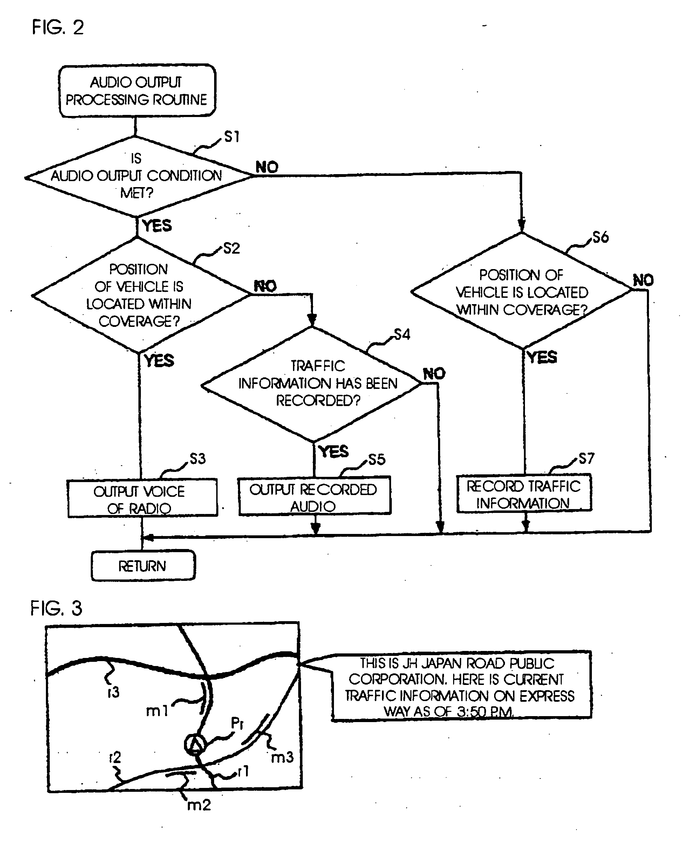

To solve the problems described above, when the beacon receiver and the radio FM multiplex broadcasting receiver in the communication section 38 receive traffic information from the road traffic information center such as traffic congestion information and/or traffic control information while the vehicle is traveling on the searched route, the CPU 31 of the navigation system according to the embodiment executes audio output processing as shown in the flowchart of FIG. 2, so that the driver may obtain audio guidance of traffic congestion information.

The audio output processing executed by the CPU 31 will be described in detail with reference to the flowchart in FIG. 2. As audio output processing, the CPU 31 determines audio output conditions as follows depending on the traffic information such as traffic congestion information or traffic control information which is received from the beacon receiver and the radio FM multiplex broadcasting receiver in the communication section 38 in Step S1.

The first audio output condition is:
that there is a difference equal to or greater than a predetermined difference between current traffic information (which may include traffic information which is received from the radio FM multiplex broadcasting receiver or the beacon receiver, or traffic information which is obtained from the Internet) and statistical data stored in the data storage section 16.

The second audio output condition is:
that it is determined that the vehicle pauses or is slow-moving on an expressway or a toll way on the basis of the vehicle speed calculated by the vehicle speed sensor 41 or the GPS sensor.

The third audio output condition is:
that the camera 6 takes an image of a congestion information signboard located along the traveling route and any information regarding a congested area, an accident, or a road construction is displayed on the screen of the display section 35.

The fourth audio output condition is:
that the beacon receiver of the communication section 38 receives the latest traffic information from the road traffic information center or the information center 51, or that the radio FM multiplex broadcasting receiver receives the latest traffic information, or further that any information terminal device such as a PC, a PDA, or a mobile phone receives the latest traffic information from the Internet.

The fifth audio output condition is:
that the vehicle enters the congested area which is announced on the basis of traffic information which the beacon receiver of the communication section 38 receives from the road traffic information center or the information center 51 or the congested area stored in traffic information in statistical data.

The sixth audio output condition is:
that the beacon receiver of the communication section 38 receives traffic information of a congested area, an accident, or road construction from the road traffic information center or the information center 51, or that the radio FM multiplex broadcasting receiver receives traffic information of a congested area, an accident, or road construction.

The seventh audio output condition is:
that the current position of the vehicle detected by the current position detecting device approaches a congested area, an accident point, or a road construction area which is obtained from traffic information received by the radio FM multiplex broadcasting receiver or the beacon receiver, or from the Internet.

When any one of the audio output conditions described above is met, the CPU 31 determines "Yes" in Step S1 and further determines whether the vehicle is located within the coverage of the radio station in Step S2. There are two ways for the CPU 31 to detect the coverage of the radio station. One way is that the CPU 31 detects the coverage of the radio station on the basis of the position of the radio station, the coverage, and the reception frequency stored in the data storage section 16. The other way is that the CPU 31 detects the coverage of the radio station on the basis of the reception received from the radio station. After detecting the coverage of the radio station, the CPU 31 makes the determination in Step S2 and if it is determined "Yes", the CPU 31 outputs audio traffic information regarding the congested area from the speaker of the audio output section 37 in Step S3. For example, as shown in FIG. 3, while the searched route is displayed on the screen of the display section 35, the audio guidance such as "This is JH Japan Highway Public Corporation. Here is traffic information as of 3:50 p.m." is announced to the driver.

While the vehicle is traveling outside of the coverage of the radio station, the CPU 31 determines "No" in Step S2 and determines whether traffic information regarding the congested area which has been received from the road traffic information center or the information center 51 in Step S4 is stored in the RAM 32 or not. If the CPU 31 determines "Yes", the traffic information regarding the congested area which has been stored in the RAM 32 in advance is outputted with audio guidance from the speaker of the audio output section 37. In a similar way to the procedure described above, for example, as shown in FIG. 3, while the searched route is displayed on the screen of the display section 35, the audio guidance such as "This is JH Japan Highway Public Corporation. Here is traffic information as of 3:50 p.m." is announced to the driver. Therefore, the driver may know congestion information on the traveling route even while the driver is traveling outside of the coverage of the radio station.

When none of the audio output conditions is met during audio output processing, the CPU 31 determines "No" in Step S1 and further determines whether the vehicle is located within the coverage of the radio station in Step S6. When it is determined "Yes", the CPU 31 stores traffic information, which includes traffic congestion information and traffic control information received from the beacon receiver or the radio FM multiplex broadcasting receiver in the communication section 38 in Step S7, in the RAM 32. As a result, the CPU 31 determines "Yes" in Step S4, so that the CPU 31 outputs traffic congestion information which has been stored in the RAM 32 in advance in Step S5 with audio guidance from the speaker of the audio output section 37.

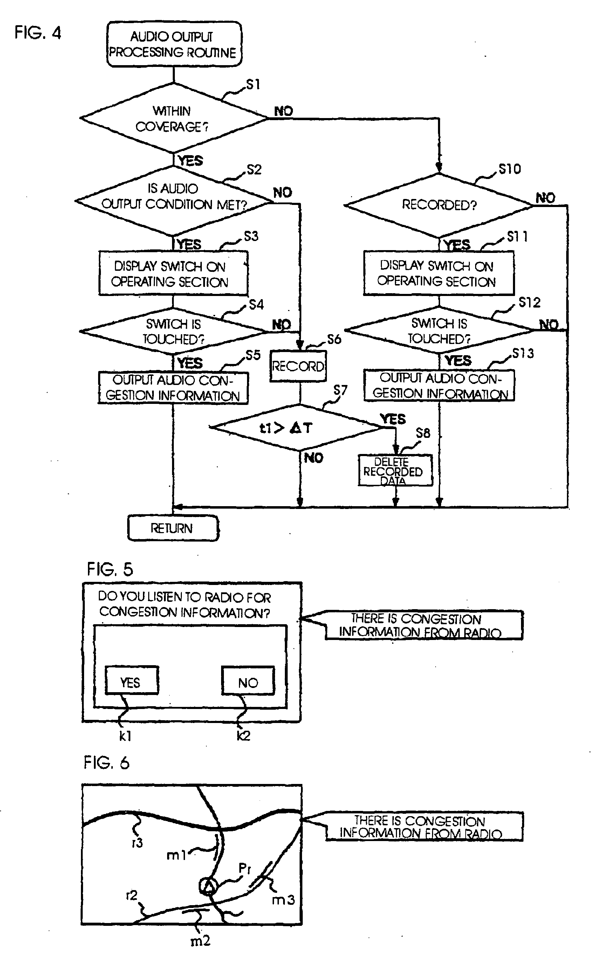

According to another embodiment of the invention, audio output processing in FIG. 4 may be used instead of the audio output processing described above. According to the audio output processing in FIG. 4, the CPU 31 determines whether the vehicle is located within the coverage of the radio station in Step S1. When it is determined "Yes", the CPU 31 further determines same audio output conditions as the conditions in the embodiment described above depending on the traffic information which is received from the radio receiver of the communication section 38 in Step S2.

If any one of the conditions is met, the CPU 31 determines "Yes" in Step S2 and displays a switch k1 which indicates "Yes" and a switch k2 which indicates "No" on the screen of the display of the display section 35 as shown in FIG. 5 in Step S3. When the driver touches the switch k1 which indicates "Yes", the CPU 31 determines "Yes" in Step S4 and announces audio traffic information regarding the congestion information from the speaker of the audio output section 37 in Step S5. For example, as shown in FIG. 3, while the searched route is displayed on the screen of the display section 35, the audio guidance such as "This is JH Japan Highway Public Corporation. Here is traffic information as of 3:50 p.m." is announced to the driver. When the driver touches the switch k2 which indicates "No", it is determined "No" in Step S4 and the traffic information regarding the congested area is stored in the RAM 32 of the navigation processing section 17 in Step S6. Note that, when the CPU 31 determines "No" in Step S2, the traffic information received from the road traffic information center or the information center 51 in Step S6 is stored in the RAM 32 of the navigation processing section 17.

While the vehicle is traveling outside of the coverage of the radio station, the CPU 31 determines "No" in Step S1 and determines whether the traffic information received from the road traffic information center or the information center 51 in Step S 10 has been stored in the RAM 32. When it is determined "Yes", as shown in FIG. 5, the switch k1 which indicates "Yes" and the switch k2 which indicates "No" are displayed on the screen of the display of the display section 35 in Step S11. As a result, when the driver wants to know the existence of the traffic congestion on the traveling route ahead of the vehicle, the driver touches the switch k1 which indicates "Yes". The CPU 31 determines "Yes" in Step S12, so that the traffic information regarding the traffic congestion which has been stored in the RAM 32 in advance is announced with audio guidance from the speaker of the audio output section 37 in Step S13. For example, as shown in FIG. 6, while the searched route is displayed on the screen of the display of the display section 35, the audio guidance such as "There is congestion information to be announced." is announced to the driver. When the driver touches the switch k2 which indicates "No", the CPU 31 determines "No" in Step S12 so that the audio output processing described above is repeated.

Note that, at the time the CPU 31 stores the traffic information which is received from the road traffic information center or the information center 51 in step S6 during audio output processing, the CPU 31 starts to time a predetermined time period ΔT. When the predetermined time period ΔT has elapsed since the traffic information has been stored (hereinafter the time period is referred to as storage time t1), the traffic information is deleted from the RAM 32 in Step S7. Thereby, traffic information determined in Step S2 is always updated while the vehicle is traveling so that it may be possible to provide latest traffic information all the time.

As will be appreciated from the foregoing, according to the navigation system for the vehicle of the current invention, when the audio output processing is executed during the travel of the vehicle and when it is determined that any one of the audio output conditions for traffic congestion is met in Step S2 in FIG. 2, the switches which allow the driver to determine whether the driver listens to the information regarding traffic congestion are displayed on the screen of the display of the display section 35. The driver touches one of the switches and the driver may listen to the information regarding traffic congestion, if needed. Even when the vehicle is traveling outside of the coverage of the radio station, the driver may still obtain the latest traffic information regarding traffic congestion with audio guidance once touching the switch displayed on the screen of the display of the display section 35 in Step S 11.

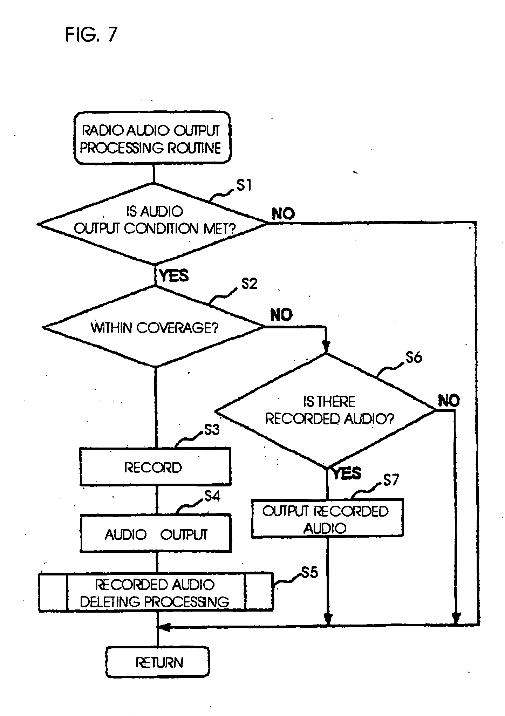

According to another embodiment of the current invention, audio output processing in FIG. 7 may be used instead of the audio output processing in FIG. 2. According to the audio output processing in FIG. 7, when any one of the audio output conditions described above is met, the CPU 31 determines "Yes" in Step S 1 and further determines whether the vehicle is located within the coverage of the radio station in Step S2. When it is determined "Yes", the CPU 31 stores traffic information regarding traffic congestion, which is received from the radio station by the communication section 38 in Step S3, in the RAM 32 and announces the traffic information regarding traffic congestion to the driver with audio guidance from the speaker of the audio output section 37 in Step S4. Next, the CPU 31 executes deleting processing of stored audio data in Step S5. As deleting processing, the CPU 31 determines whether deletion conditions described below are met or not. When it is determined that the deletion conditions are met, traffic information stored in the RAM 32 is deleted.
1) When a predetermined time period has elapsed since the communication section 38 has received traffic information.
2) When the vehicle moves a predetermined distance from the position at which the communication section 38 has received traffic information.
3) When the vehicle moves away from a predetermined corresponding coverage which is set for every point at which the communication section 38 has received traffic information.

According to the condition 1, the CPU 31 stores the time when the communication section 38 receives traffic information and calculates a time period elapsing from the time. According to the condition 2, the CPU 31 stores coordinates of the point at which the communication section 38 receives traffic information and calculates the distance from the point to a point until which the vehicle moves. According to the condition 3, the CPU 31 tracks the current position of the vehicle detected by the current position detecting device and determines whether the current position of the vehicle is located within a predetermined corresponding coverage of the radio station, the coverage is set for every point at which traffic information is stored in the data storage section 16.

Therefore, after traffic information which has been stored in the RAM 32 is updated in Step S5 in accordance with the movement of the vehicle, the audio output conditions are repeatedly determined in Step S1.

While it is determined "Yes" in Step S1, if the vehicle is traveling outside of the coverage of the radio station, the CPU 31 determines "No" in Step S2 and further determines whether traffic information which has been received from the radio station in advance is stored in the RAM 32 in Step S6. When it is determined "Yes" in Step S6, the CPU 31 announces traffic information received from the radio station to the driver with audio guidance from the speaker of the audio output section 37 in Step S7. After that, the CPU 31 executes audio deleting processing in Step S5 and repeatedly determines the audio output conditions in Step S1. Note that, when it is determined "No" in Step S6, the CPU 31 executes audio deleting processing in Step S5 and repeatedly determines the audio output conditions in Step S 1.

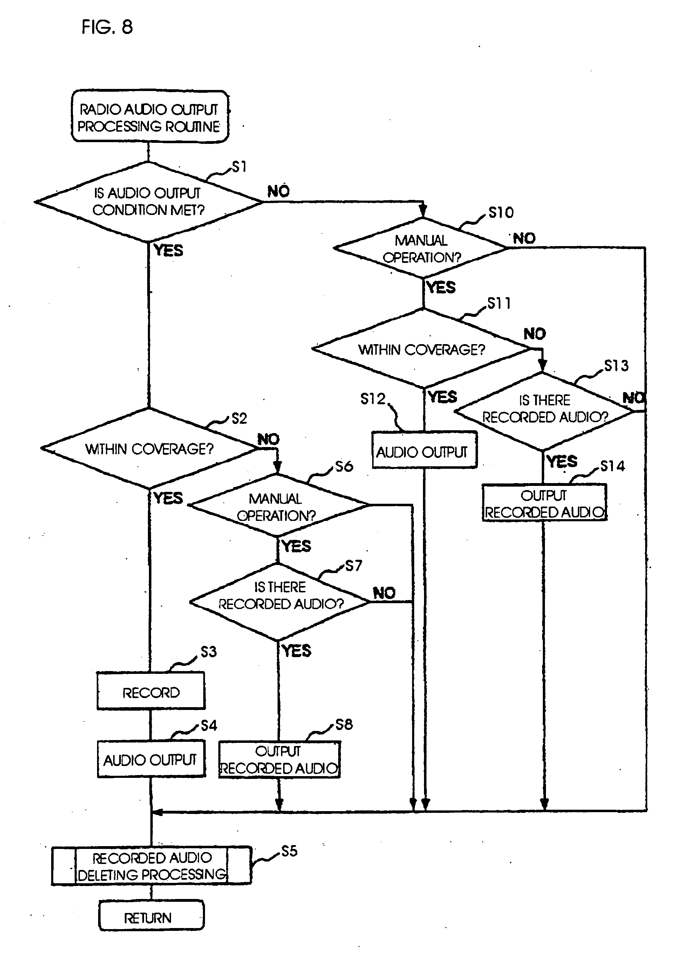

According to the embodiment of the current invention, an audio output processing program in FIG. 8 may be used. According to the audio output processing program in Steps S 1 through S5, the CPU 31 executes the same processing as the processing of the audio output control program in FIG. 7, that is, the CPU 31 announces traffic information received from the radio station with audio guidance from the speaker of the audio output section 37. When it is determined "Yes" in Step S1 according to the audio output processing program, if the vehicle is traveling outside of the coverage of the radio station, the CPU 31 determines "No" in Step S2 and further determines whether the driver operates the operating button or a remote controller (not shown), both of them are mounted on the operating section 34, in Step S6. When it is determined "Yes", the CPU 31 determines whether traffic information received from the radio station is stored in the RAM 32 in Step S7. When it is determined "Yes" in Step S7, the CPU 31 announces traffic information regarding traffic congestion which has been stored in the RAM 32 in advance to the driver with audio guidance from the speaker of the audio output section 37 in Step S8. Then the CPU 31 executes the audio deleting processing in Step S5 and repeatedly determines the audio output conditions in Step S 1.

When it is determined "No" in Step S1, the CPU 31 determines whether the driver operates the operating button or the remote controller mounted on the operating section 34 in Step S10. When it is determined "Yes", the CPU 31 further determines whether the vehicle is located within the coverage of the radio station. When it is determined "Yes" in Step S11, the CPU 31 announces traffic information regarding traffic congestion received from the radio station to the driver with audio guidance from the speaker of the audio output section 37 in Step S12. Then, the CPU 31 executes audio deleting processing in Step S5 and repeatedly determines the audio output conditions in Step S1. When it is determined "No" in Step S11, the CPU 31 determines whether traffic information which has been received from the radio station in advance is stored in the RAM 32 in Step S13. When it is determined "Yes" in Step S13, the CPU 31 announces traffic information regarding traffic congestion which has been stored in the RAM 32 in advance to the driver with audio guidance from the speaker of the audio output section 37 in Step S14. Then, the CPU 31 executes the audio deleting processing in Step S5 and repeatedly determines the audio output conditions in Step S1. When it is determined "No" in Step S 10, the CPU 31 executes the audio deleting processing in Step S5 and repeatedly determines the audio output conditions in Step S 1.

## Claims

1. A navigation system for a vehicle, comprising:
a current position detecting device (15) adapted to detect a current position of the vehicle;
a data storage section (16) adapted to store map data necessary for searching for a route and coverage of a radio station along the route which is searched on the basis of map data;
a communication section (38) adapted to receive traffic information which is broadcast from the radio station and current traffic information which is provided from a road traffic information center (51);
an audio output determining device (17) adapted to determine whether the current traffic information which is received by the communication section is to be output under a predetermined audio output condition for specifying traffic information;
a coverage determining device (17) adapted to determine whether the current position of the vehicle is located within the coverage of the radio station which is stored in the data storage section on the basis of the current position detecting device;
a storage device (16) adapted to store traffic information which is received from the radio station by the communication section (38) within the coverage of the radio station, provided that the audio output determining device determines that the audio output condition is not met; and
an audio output device (17) adapted to output the traffic information, which is received from the radio station by the communication section, with audio guidance, provided that the audio output determining device determines that the audio output condition is met and that the coverage determining device determines that the vehicle is located within the coverage and to output the traffic information stored in the storage device with audio guidance, provided that the audio output determining device determines that the audio output condition is met and that the coverage determining device determines that the vehicle is not located within the coverage of the radio station.

2. A navigation system according to claim 1 wherein the audio determining output device (31) determines as the audio output condition that there is a predetermined difference between current traffic information and statistical data stored in the data storage section (16).

3. A navigation system according to claim 1 wherein the audio output determining device (31) determines as the audio outputs condition that it is detected that the vehicle is stepped or is slowing down on an expressway or a toll-way on the basis of a vehicle speed calculated by a vehicle speed sensor or a GPS sensor (15).

4. A navigation system according to claim 1 wherein the audio output determining device (31) determines as the audio outpout condition that an in-vehicle camera (46) captures an image of a congestion information signboard mounted along a traveling route and information of traffic congestion, an accident, or road construction information.

5. A navigation system according to claim 1 wherein the audio output determining device (31) determines as the audio output condition that a beacon receiver of a communication section receives latest traffic information from a road traffic information center or an information center (51), that a radio FM multiplex broadcasting receiver receives the latest traffic information, or that the latest traffic information is received through the Internet by means of an information terminal device such as a PC, a PDA, or a mobile phone.

6. A navigation system according to claim 1 wherein the audio output determining device (31) determines as the audio output condition that the vehicle enters a congested area, data according to the congested area is included in traffic information which is received from the road traffic information center or the information center (51) by the beacon receiver of the communication section or traffic information which is stored in statistical data.

7. A navigation system according to claim 1 wherein the audio output determining device (31) determines as the audio output condition that the beacon receiver of the communication section 38 receives traffic information regarding a congested area, a traffic accident, or road construction from the road traffic information center or the information center (51), or that the radio FM multiplex broadcasting receiver receives traffic information regarding a congested area, a traffic accident, or road construction.

8. A navigation system according to claim 1 wherein the audio output determining device (31) determines as the audio output condition that a current position of the vehicle which is detected by a current position detecting device (15) approaches a congested area, a point where an accident happened, or road construction area obtained from traffic information which is further obtained from the radio FM multiplex broadeasting receiver, the beacon receiver, or the Internet.

9. A navigation system according to any one of claims 1 to 8 including a device for deleting traffic information stored in the storage device (16) at certain intervals and updating the traffic information to traffic information which is newly received by the communicating device (38).

## Patentansprüche

1. Navigationssystem für ein Fahrzeug, enthaltend:
eine Detektionsvorrichtung (15) für eine gegenwärtige Position, die angepasst ist zum Detektieren einer gegenwärtigen Position des Fahrzeugs;
einen Datenspeicherabschnitt (16), der angepasst ist zum Speichern von Kartendaten, die notwendig sind zum Suchen einer Route und Reichweite einer Funkstation entlang der Route, die basierend auf den Kartendaten gesucht wird;
einen Kommunikationsabschnitt (38), der angepasst ist zum Empfangen von Verkehrsinformation, die von der Funkstation ausgesendet wird, und von gegenwärtiger Verkehrsinformation, die von einem Straßenverkehrsinformationszentrum (51) bereitgestellt wird;
eine Audioausgabebestimmungsvorrichtung (17), die angepasst ist zum Bestimmen, ob die gegenwärtige Verkehrsinformation, die von dem Kommunikationsabschnitt empfangen wird, unter einer vorbestimmten Audioausgabebedingung zum Spezifizieren der Verkehrsinformation auszugeben ist;
eine Reichweitenbestimmungsvorrichtung (17), die angepasst ist zum Bestimmen, ob die gegenwärtige Position des Fahrzeugs innerhalb der Reichweite der Funkstation liegt, die in dem Datenspeicherabschnitt gespeichert ist, basierend auf der Detektionsvorrichtung für die gegenwärtige Position;
eine Speichervorrichtung (16), die angepasst ist zum Speichern von Verkehrsinformation, die von der Funkstation durch den Kommunikationsabschnitt (38) innerhalb der Reichweite der Funkstation empfangen wird, vorausgesetzt, dass die Audioausgabebestimmungsvorrichtung bestimmt, dass die Audioausgabebedingung nicht erfüllt ist; und
eine Audioausgabevorrichtung (17), die angepasst ist zum Ausgeben der Verkehrsinformation, die von der Funkstation durch den Kommunikationsabschnitt empfangen wird, mit einer Audioführung, vorausgesetzt, dass die Audioausgabebestimmungsvorrichtung bestimmt, dass die Audioausgabebedingung erfüllt ist und dass die Reichweitenbestimmungsvorrichtung bestimmt, dass das Fahrzeug sich innerhalb der Reichweite befindet, und zum Ausgeben der Verkehrsinformation, die in der Speichervorrichtung gespeichert ist, mit Audioführung, vorausgesetzt, dass die Audioausgabebestimmungsvorrichtung bestimmt, dass die Audioausgabebedingung erfüllt ist und die Reichweitenbestimmungsvorrichtung bestimmt, dass das Fahrzeug sich nicht innerhalb der Reichweite der Funkstation befindet.

2. Navigationssystem nach Anspruch 1, bei dem die Audiobestimmungsausgabevorrichtung (31) als Audioausgabebedingung bestimmt, dass es einen vorbestimmten Unterschied zwischen der gegenwärtigen Verkehrsinformation und statistischen Daten, die in dem Datenspeicherabschnitt (16) gespeichert sind, gibt.

3. Navigationssystem nach Anspruch 1, bei dem die Audioausgabebestimmungsvorrichtung (31) als Audioausgabebedingung bestimmt, dass detektiert wird, dass das Fahrzeug angehalten ist oder auf einer Schnellstraße oder einer Mautstraße langsamer wird, basierend auf einer Fahrzeuggeschwindigkeit, die von einem Fahrzeuggeschwindigkeitssensor oder einem GPS-Sensor (15) berechnet wird.

4. Navigationssystem nach Anspruch 1, bei dem die Audioausgabebestimmungsvorrichtung (31) als Audioausgabebedingung bestimmt, dass eine fahrzeuginterne Kamera (46) ein Bild eines Stauinformationsschilds erfasst, das entlang einer Fahrtroute montiert ist, und Information des Verkehrsstaus, einen Unfall oder Straßenbauinformation.

5. Navigationssystem nach Anspruch 1, bei dem die Audioausgabebestimmungsvorrichtung (31) die Audioausgabebedingung bestimmt, dass ein Bakenempfänger eines Kommunikationsabschnitts jüngste Verkehrsinformation von einem Straßenverkehrsinformationszentrum oder einem Informationszentrum (51) empfängt, dass einen Funk-FM-Multiplexrundfunkempfänger die jüngste Verkehrsinformation empfängt, oder dass die jüngste Verkehrsinformation über das Internet mittels einer Informationsendgerätevorrichtung empfangen wird, wie beispielsweise PC, PDA oder Mobiltelefon.

6. Navigationssystem nach Anspruch 1, bei dem die Audioausgabebestimmungsvorrichtung (31) als Audioausgabebedingung bestimmt, dass das Fahrzeug in einen Staubereich gerät, wobei Daten gemäß dem Staubereich in der Verkehrsinformation enthalten sind, die von dem Straßenverkehrsinformationszentrum oder von dem Informationszentrum (51) durch den Bakenempfänger des Kommunikationsabschnitts empfangen wird, oder der Verkehrsinformation, die in statistischen Daten gespeichert ist.

7. Navigationssystem nach Anspruch 1, bei dem die Audioausgabestimmungsvorrichtung (31) als Audioausgabebedingung bestimmt, dass der Bakenempfänger des Kommunikationsabschnitts (38) Verkehrsinformation empfängt bezüglich eines Staubereichs, eines Verkehrsunfalls oder Straßenbaumaßnahmen von dem Straßenverkehrsinformationszentrum oder dem Informationszentrum (51), oder dass der Funk-FM-Multiplexrundfunkempfänger Verkehrsinformation bezüglich eines Staubereichs, eines Verkehrsunfalls oder Straßenbaus empfängt.

8. Navigationssystem nach Anspruch 1, bei dem die Audioausgabebestimmungsvorrichtung (31) als Audioausgabebedingung bestimmt, dass eine gegenwärtige Position des Fahrzeugs, die durch eine Detektionsvorrichtung (15) für eine gegenwärtige Position detektiert wird, sich einem Staubereich, einer Stelle, wo ein Unfall passiert ist, oder einem Straßenbaubereich nähert, die von Verkehrsinformationen gewonnen werden, die ferner, von dem Funk-FM-Multiplexrundfunkempfänger, dem Bakenempfänger oder dem Internet erhalten wird.

9. Navigationssystem nach einem der Ansprüche 1 bis 8, enthaltend eine Vorrichtung zum Löschen der Verkehrsinformation, die in der Speichervorrichtung (16) gespeichert ist, zu bestimmten Intervallen, und Aktualisieren der Verkehrsinformation mit Verkehrsinformation, die von der Kommunikationsvorrichtung (38) neu empfangen wird.

## Revendications

1. Système de navigation pour véhicule, comprenant :
un dispositif de détection de position actuelle (15) adapté pour détecter une position actuelle du véhicule ;
une section de stockage de données (16) adaptée pour stocker des données cartographiques nécessaires pour chercher une route et la couverture d'une station radio le long de la route qui est recherchée sur la base de données cartographiques ;
une section de communication (38) adaptée pour recevoir des informations de circulation qui sont diffusées par la station radio et des informations de circulation actuelles qui sont fournies par un centre d'informations de circulation routière (51) ;
un dispositif de détermination d'émission audio (17) adapté pour déterminer si les informations de circulation actuelle qui sont reçues par la section de communication doivent être émises dans une condition d'émission audio prédéterminée pour spécifier des informations de circulation ;
un dispositif de détermination de couverture (17) adapté pour déterminer si la position actuelle du véhicule se trouve dans la couverture de la station radio qui est stockée dans la section de stockage de données sur la base du dispositif de détection de position actuelle ;
un dispositif de stockage (16) adapté pour stocker des informations de circulation qui sont reçues de la station radio par la section de communication (38) dans la couverture de la station radio, à condition que le dispositif de détermination d'émission audio détermine que la condition d'émission audio n'est pas satisfaite ; et
un dispositif d'émission audio (17) adapté pour émettre les informations de circulation qui sont reçues de la station radio par la section de communication, avec un guidage audio, à condition que le dispositif de détermination d'émission audio détermine que la condition d'émission audio est satisfaite et que le dispositif de détermination de couverture détermine que le véhicule se trouve dans la couverture et pour émettre les informations de circulation stockées dans le dispositif de stockage avec guidage audio, à condition que le dispositif de détermination d'émission audio détermine que la condition d'émission audio est satisfaite et que le dispositif de détermination de couverture détermine que le véhicule ne se trouve pas dans la couverture de la station radio.

2. Système de navigation selon la revendication 1, dans lequel le dispositif de détermination d'émission audio (31) détermine comme condition d'émission audio qu'il y a une différence prédéterminée entre les informations de circulation actuelle et les données statistiques stockées dans la section de stockage de données (16).

3. Système de navigation selon la revendication 1, dans lequel le dispositif de détermination d'émission audio (13) détermine comme condition d'émission audio que l'on détecte que le véhicule est arrêté ou ralentit sur une voie rapide ou une route à péage sur la base d'une vitesse du véhicule calculée par un capteur de vitesse de véhicule ou un capteur de type GPS (13).

4. Système de navigation selon la revendication 1, dans lequel le dispositif de détermination d'émission audio (31) détermine comme condition d'émission audio qu'une caméra (46) embarquée dans le véhicule saisit une image d'un panneau indicateur d'informations d'encombrement monté le long d'une route de déplacement et des informations d'encombrement de circulation, un accident ou des informations de construction de route.

5. Système de navigation selon la revendication 1, dans lequel le dispositif de détermination d'émission audio (31) détermine comme condition de d'émission audio qu'un récepteur de signaux de balise d'une section de communication reçoive les dernières informations de circulation d'un centre d'informations de circulation routière ou d'un centre d'informations (51), qu'un récepteur multiplex de diffusion de radio FM reçoive les dernières informations de circulation ou que les dernières informations de circulation soient reçues via Internet à l'aide d'un dispositif terminal d'informations tel qu'un PC, un PDA ou un téléphone portable.

6. Système de navigation selon la revendication 1, dans lequel le dispositif de détermination d'émission audio (31) détermine comme condition d'émission audio que, lorsque le véhicule entre dans une zone encombrée, des données relatives à la zone encombrée soient comprises dans les informations de circulation qui sont reçues du centre d'informations de circulation routière ou du centre d'informations (51) par le récepteur de signaux de balise de la section de communication ou des informations de circulation qui sont stockées dans les données statistiques.

7. Système de navigation selon la revendication 1, dans lequel le dispositif de détermination d'émission audio (31) détermine comme condition d'émission audio que le récepteur de signaux de balise de la section de communication 38 reçoive des informations de circulation concernant une zone encombrée, un accident de circulation ou une construction de route du centre d'informations de circulation routière ou du centre d'informations (51), ou que le récepteur multiplex de diffusion de radio FM reçoive des informations de circulation concernant une zone encombrée, un accident de circulation ou une construction de route.

8. Système de navigation selon la revendication 1, dans lequel le dispositif de détermination d'émission audio (31) détermine comme condition d'émission audio qu'une position actuelle du véhicule qui est détectée par un dispositif de détection de position actuelle (15) s'approche d'une zone encombrée, d'un point où s'est produit un accident ou d'une zone de construction de route, informations tirées des informations de circulation qui sont en outre obtenues du récepteur multiplex de diffusion de radio FM, du récepteur de signaux de balise ou d'Internet.

9. Système de navigation selon l'une quelconque des revendications 1 à 8, comprenant un dispositif pour effacer les informations de circulation stockées dans le dispositif de stockage (16) à certains intervalles et mettre à jour les informations de circulation pour obtenir des informations de circulation qui sont fraîchement reçues par le dispositif de communication (38).
